# EUROPEAN PATENT SPECIFICATION

(11) **EP 3 442 191 B1**
(45) Date of publication and mention of the grant of the patent: **23.09.2020**
(21) Application number: 17185049.8
(22) Date of filing: 07.08.2017
(51) Int. Cl.: H04L 29/06, H04W 12/12, H04W 12/00

(54) **PREVENTION OF IDENTITY SPOOFING IN A COMMUNICATIONS NETWORK**
VERHINDERUNG VON IDENTITÄTS-SPOOFING IN EINEM KOMMUNIKATIONS-NETZWERK
PREVENTION DE LA MYSTIFICATION D'IDENTITE DANS UN RESEAU DE COMMUNICATION

(43) Date of publication of application: 13.02.2019
(73) Proprietor: Nokia Solutions and Networks Oy, 02610 Espoo (FI)
(72) Inventor: HOLTMANNS, Silke, 01800 Klaukkala (FI); MICHE, Yoan, 01800 Klaukkala (FI); KALLIOLA, Aapo, 00710 Helsinki (FI); EKMAN, Jani Petteri, 36270 Kangasala (FI)
(74) Representative: Laine IP Oy

(56) References cited:
- WO-A1-2016/098997
- US-A1- 2015 358 336
- HUAWEI ET AL: "Digest Authentication without Authorization header in initial REGISTER message", 3GPP DRAFT; C1-09-094569, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Phoenix; 20091012, 12 October 2009 (2009-10-12), XP050382862, [retrieved on 2009-10-18]
- "3rd Generation Partnership Project; Technical Specification Group Core Network and Terminals; Numbering, addressing and identification (Release 15)", 3GPP STANDARD; 3GPP TS 23.003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V15.0.0, 19 June 2017 (2017-06-19), pages 1-108, XP051298782, [retrieved on 2017-06-19]
- "3rd Generation Partnership Project; Technical Specification Group Services and System Aspects; 3G security; Access security for IP-based services (Release 14)", 3GPP STANDARD; 3GPP TS 33.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V14.1.0, 14 June 2017 (2017-06-14), pages 1-145, XP051298482, [retrieved on 2017-06-14]

## Description

### FIELD

The present invention relates to protecting communications networks against malicious behaviour, such as identity spoofing.

### BACKGROUND

Communication networks may be accessed by subscriber terminals, also referred to as user equipments, to obtain connectivity over the network. User equipments may be associated with subscriptions in the network, to enable the network operator to control who uses his network, and to prevent users from over-using resources of the network in excess of what is agreed in their subscriptions. For example, the subscription may specify that a set number of megabytes or gigabytes of data may be communicated by the subscriber during a fixed period.

A user equipment, a secure element in the user equipment and/or the user himself may be associated with identities. An identity may comprise a numeric or alphanumeric string, for example. An identity may enable the user to become reachable over the network. For example, an MSISDN, defined in 3GPP specification TS23.003, identifies a subscription. By providing a communications request to the network which comprises an MSISDN of a called party, the network should route the call to this party based on the identity provided. In brief, the MSISDN may be the number "dialled" when calling the subscriber.

A caller-id feature enables the called party to see an identity of the caller before deciding on whether to accept the call. The name of the caller, for example, may be displayed on a user equipment screen of the called party, or the user equipment may audibly pronounce the name of the caller, based on an identity, such as an MSISDN, provided by the caller to identify himself.

A caller-id feature, or a similar feature, may also be used in accessing a voicemail system, for example, such that the user may access his own voicemail by issuing a request to a voicemail server, or voicemail service number. It is therefore important that a user, or user equipment, be prevented from accidentally or maliciously impersonating a different user.

Document "Digest Authentication without Authorization header in initial REGISTER message", by HUAWEI ET AL, 3GPP DRAFT; C1-09-094569, Oct. 12, 2009, discloses whether a private user identity in an Authorization header of a REGISTER message is the same as a private user identity which has been previously authenticated. Document TS23.003 v.15.0.0 (3GPP specification) discloses a Security Gateway configured to provide security features. Document TS33.203 v.14.1.0 (3GPP specification) discloses configuring a P-CSCF with TLS/TCP functionality. Document WO2016/098997A1 discloses a GTP tunnel and checking whether consistent MSISDN identies are received over it. Document US2015/358336 discloses security procedures in a home subscriber server, HSS, of an IMS network.

### SUMMARY OF THE INVENTION

According to a first aspect of the present invention, there is provided an apparatus comprising at least one processing core, at least one memory including computer program code, the at least one memory and the computer program code being configured to, with the at least one processing core, cause the apparatus at least to participate in establishing a cryptographic tunnel between the apparatus and a user equipment, associate, with the cryptographic tunnel, at least one first identity used in connection with establishing the cryptographic tunnel, the at least one identity being associated with the user equipment and verify at least one second identity, comprised in a request received from the user equipment via the cryptographic tunnel, is consistent with at least one of the at least one first identity.

Various embodiments of the first aspect may comprise at least one feature from the following bulleted list:
- the at least one memory and the computer program code are configured to, with the at least one processing core, cause the apparatus to reject the request responsive to the at least one second identity being inconsistent with the at least one first identity
- the at least one memory and the computer program code are configured to, with the at least one processing core, cause the apparatus to authenticate the at least one first identity in connection with establishing the cryptographic tunnel
- the apparatus is configured to act as a proxy call session control function, P-CSCF, of an IP multimedia subsystem, IMS
- the at least one memory and the computer program code are configured to, with the at least one processing core, cause the apparatus to verify the request does not comprise more than a predetermined number of second identities
- the request comprises a session initiation protocol, SIP, invite request or a SIP-register request
- the at least one second identity comprises at least one of a tel uniform resource identifier, tel-URI and a one second identity comprises at least one of a Tel URI, SIP URI and other (temporary) public user identity
- the request relates to initiating at least one of a voice over long term evolution, VoLTE, WebRTC and a voice over Wi-Fi, VoWiFi, session
- the cryptographic tunnel comprises at least one of an internet protocol security, IPsec, tunnel and a transport layer security, TLS, tunnel

According to a second aspect of the present invention, there is provided a method comprising participating in establishing a cryptographic tunnel between an apparatus and a user equipment, associating, with the cryptographic tunnel, at least one first identity used in connection with establishing the cryptographic tunnel, the at least one identity being associated with the user equipment and verifying at least one second identity, comprised in a request received from the user equipment via the cryptographic tunnel, is consistent with at least one of the at least one first identity.

Various embodiments of the second aspect may comprise at least one feature from the following bulleted list:
- rejecting the request responsive to the at least one second identity being inconsistent with the at least one first identity
- authenticating the at least one first identity in connection with establishing the cryptographic tunnel
- the apparatus is configured to act as a proxy call session control function, P-CSCF, of an IP multimedia subsystem, IMS
- verifying the request does not comprise more than a predetermined number of second identities
- the request comprises a session initiation protocol, SIP, invite request or a SIP-register request
- the at least one second identity comprises at least one of a tel uniform resource identifier, tel-URI and a one second identity comprises at least one of a Tel URI, SIP URI and other (temporary) public user identity
- the request relates to initiating at least one of a voice over long term evolution, VoLTE, WebRTC and a voice over Wi-Fi, VoWiFi, session.

According to a third aspect of the present invention, there is provided an apparatus comprising means for participating in establishing a cryptographic tunnel between an apparatus and a user equipment, means for associating, with the cryptographic tunnel, at least one first identity used in connection with establishing the cryptographic tunnel, the at least one identity being associated with the user equipment and means for verifying at least one second identity, comprised in a request received from the user equipment via the cryptographic tunnel, is consistent with at least one of the at least one first identity.

According to a fourth aspect of the present invention, there is provided a non-transitory computer readable medium having stored thereon a set of computer readable instructions that, when executed by at least one processor, cause an apparatus to at least participate in establishing a cryptographic tunnel between an apparatus and a user equipment, associate, with the cryptographic tunnel, at least one first identity used in connection with establishing the cryptographic tunnel, the at least one identity being associated with the user equipment and verify at least one second identity, comprised in a request received from the user equipment via the cryptographic tunnel, is consistent with at least one of the at least one first identity.

According to a fifth aspect of the present invention, there is provided a computer program configured to cause a method in accordance with the second aspect to be performed.

### BRIEF DESCRIPTION OF THE DRAWINGS

FIGURE 1 illustrates an example system in accordance with at least some embodiments of the present invention;
FIGURE 2 illustrates an IMS call set-up;
FIGURE 3 illustrates an example apparatus capable of supporting at least some embodiments of the present invention;
FIGURE 4 illustrates signalling in accordance with at least some embodiments of the present invention;
FIGURE 5 is a flow graph of a method in accordance with at least some embodiments of the present invention, and
FIGURE 6 illustrates a more detailed example of the process illustrated in FIGURE 2.

### EMBODIMENTS

By associating, by a network node, at least one identity of a user equipment or subscription with a cryptographic tunnel, an identity spoofing attack may be guarded against. In detail, the network node may verify that requests received from the user equipment through the cryptographic tunnel subsequently identify the user equipment consistently with the associated at least one identity, whereby the network node is enabled to reject attempts by the user equipment to mis-identify itself through the established cryptographic tunnel.

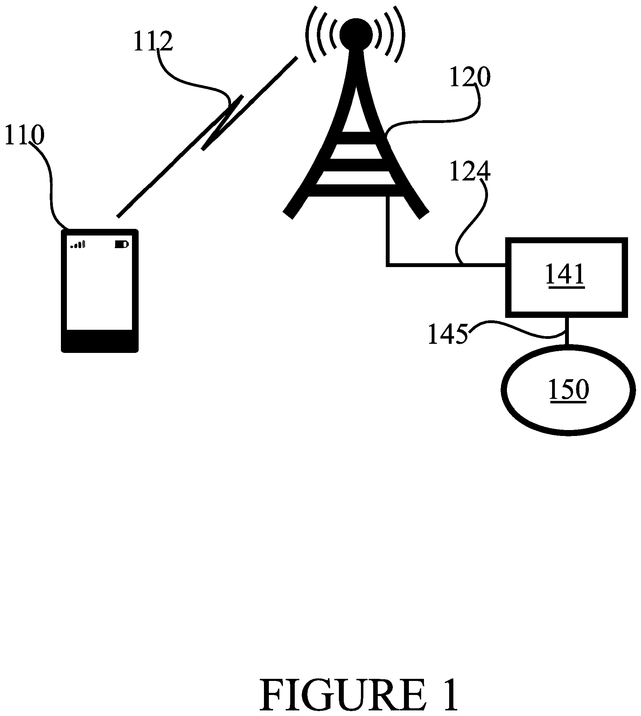

FIGURE 1 illustrates an example system in accordance with at least some embodiments of the present invention. Device 110, which may comprise, for example, a user device, user equipment, mobile phone, smartphone, tablet device, laptop computer, desktop computer or another suitable device, is in wireless communication with base station 120. Device 110 may be a user equipment.

To achieve interoperability, mobile 110 and base station 120 may be configured to operate in accordance with a same communication technology, such as, for example, a cellular or non-cellular technology. Examples of cellular communication technologies include wideband code division multiple access, WCDMA, long term evolution, LTE, and fifth generation, 5G, also known as new radio, NR. Examples of non-cellular communication technologies include wireless local area network, WLAN, and worldwide interoperability for microwave access, WiMAX, technologies. However, in some embodiments, the base station may also operate under different radio access technologies, RATs, such as LTE and 5G.

Radio link 112 connects device 110 with base station 120. Radio link 112 may be arranged in accordance with a same communication technology as device 110 and base station 120, to achieve interoperability. As said, base station 120, as well as device 110, may be capable of communicating also with other communication technologies. The expression "base station" is a terminological choice by which it is not intended to limit the present disclosure to any specific technology. Depending on a communication technology used, the expression "access point" may be used alternatively to "base station". The expression "access node" may comprise either a base station or an access point.

Base station 120 is operably connected, via connection 124, with network node 141, which may comprise, for example, a mobility management entity, MME, switch or base station controller. Network node 141 may communicate with further networks via connection 145, an example of such a network being provided in the system of FIGURE 1 as network 150. An IP multimedia subsystem, IMS, may be comprised in network 150, for example.

In an IMS system, a proxy call state control function, P-CSCF, is an initial point of contact in the IMS system for a user equipment, UE. Its functions include forwarding traffic to the UE, and maintaining security associations, such as cryptographic tunnels, to UEs. In a roaming scenario, this P-CSCF may be in a visited network.

In an IMS system, an interrogating call state control function, I-CSCF, advises concerning which home subscriber server, HSS, is appropriate for a given user. An I-CSCF may also forward an initial session initiation protocol, SIP, request to a suitable serving call state control function, S-CSCF.

In an IMS system, an S-CSCF is configured to provide session management functions including connection set-up, tear-down and routing. It is arranged to register users in an IMS system. A HSS may comprise a combination of home location register, HLR, and authentication center, AuC. The HLR comprises information related to subscribers, such as user profiles. The HLR or HSS may be configured to provide subscriber information to other network nodes. Such subscriber information may comprise, for example, IMS private identity, IMPI, IMS public identity, IMPU, globally routable user agent URI, GRUU, international mobile subscriber identity, IMSI, MSISDN, service profiles and/or other information.

Although described herein in connection with FIGURE 1 as a wirelessly connected device, in general device 110 may comprise, for example, a desktop computer with a wire-line Ethernet connection to the Internet. Such a desktop computer may receive and/or initiate, for example, internet protocol telephony calls as events.

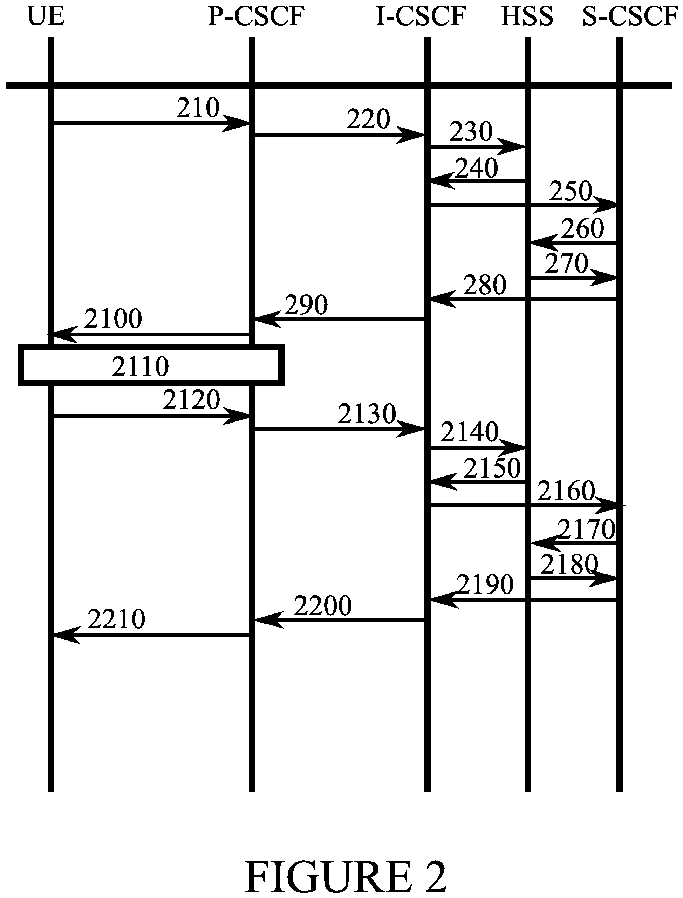

FIGURE 2 illustrates an IMS call set-up. In phase 210, the UE issues a SIP REGISTER request to the P-CSCF, which is forwarded in phase 220 to the I-CSCF. The I-CSCF inquires from HSS which S-CSCF to use, phases 230 and 240, and in phase 250 forwards the SIP REGISTER to the S-CSCF. The S-CSCF requests and receives subscriber information from HSS in phases 260 and 270, after which the S-CSCF issues a SIP 401 Unauthorized message to the UE via the I-CSCF and P-CSCF, phases 280, 290 and 2100. The SIP 401 Unauthorized message may comprise a challenge for the UE.

In phase 2110 a cryptographic tunnel, such as an IPSec tunnel, is established between the UE and the P-CSCF. In general such a cryptographic tunnel may traverse other nodes, such as a base station and/or mobility management entity, but only the UE and the P-CSCF are the endpoints of the tunnel. In some embodiments, messages traversing the tunnel need not be encrypted, rather merely integrity protected. Subsequently, in phase 2120, a SIP REGISTER is transmitted, for example via the tunnel, from the UE to the P-CSCF, which forwards it to the I-CSCF, phase 2130. Alternatively, it may be forwarded to an I-BCF in case of an initial REGISTER for a roaming user. This SIP REGISTER may comprise a response to the challenge. The I-CSCF inquires from HSS which S-CSCF to use, phases 2140 and 2150, and in phase 2160 forwards the SIP REGISTER to the S-CSCF. The S-CSCF consults HSS in phases 2170 and 2180, for example to verify the response to the challenge is correct, and in case this is so, returns a SIP 200 OK to the UE via the I-CSCF and P-CSCF, phases 2190, 2200 and 2210.

The publication "The 3G IP Multimedia Subsystem (IMS): Merging the Internet and Cellular Worlds", by Gonzalo Camarillo and Miguel-Angel Garcia-Martin, describes how an IPSec tunnel is established between the UE and P-CSCF.

IMS registration, phase 210 of FIGURE 2, is performed by a SIP REGISTER message, in accordance with IETF RFC 3261 and 3GPP TS24.229. This SIP message is authenticated by the network, the subsequent SIP messages, such as SIP INVITE or 200 OK are not normally authenticated. To initiate any IMS activity, such as calling, the UE needs to register to the IMS network.

During the registration, overall, the P-CSCF checks the public identity is used and can be found in HSS. The UE can request binding one or more public user identities, such as SIP URI or Tel URI, to a single IP contact address or to multiple IP contacts addresses covering also the case to bind the same public user identity to more than one IP address of the UE. Reference is made to 3GPP TS24.229, section 5.1.1.1.. The home network authenticates the user, for example via a diameter request to HSS, as in phase 260 of FIGURE 2. The user may authenticate the network via a diameter request to HSS. The home network may authorize the SIP registration and use of IMS resources. Further, the UE may negotiate with P-CSCF concerning a security mechanism for IPSec what will be in place for subsequent signalling. The P-CSCF and the UE may establish a set of security associations that protect the integrity of SIP messages sent between the UE and the P-CSCF. Such messages may traverse, for example, cellular base station and gateway nodes of the cellular system.

A public URI of a subscriber may appear, for example, as follows:

```
 Sip:Silke.holtmanns@nokia.com
 Phone number (called Tel URI)
 Sip:Yoan@miche.domainV.com;transport=tcp
 With SDP information (Session Description Protocol)
 v=0
 o= Aapo234512345 236376607 IN IP4 192.0.0.4
 s=Let's talk about serious security
 c=IN IP4 22.77.99.88
 t=0 0
 m=audio 30000 RTP/AVP 0
 a=sendrecv
```

During the SIP REGISTER procedure, the public URI of that IMS user may be bound to a certain IP address and/or host name, so that later data can be routed. The IP address / host names may be given by the IP-CAN session during attachment.

The UE may retrieve a private user identity from a subscriber application, which may reside in a UICC card, for example. The UE may also thus obtain its public user identity and a home-domain URI, for example. Network attachment subsystem, NASS, based models do not implement an authentication mechanism, to reduce authentication delay. In these models, the IMS users are authenticated by the underlying access network authentication and their identity and their IP address are sent to IMS network as the proof of authentication. Both solutions assume anti-spoofing mechanisms in access networks while forging of IP address would lead to a forged identity in IMS network.

An example of a SIP REGISTER message is given below:

```
REGISTER sip : ims . mnc042 . mcc123 .3 gppnetwork . org SIP /2.0
 Content - Length : 0
 Via : SIP /2.0/ UDP [{UE_ip}]:5060; branch = c7dH8567G276 ; transport = UDP ;
 rport
 User - Agent : IM - client / OMA1 .0 Samsung /SM - G920F - XXU2BOFJ Samsung -
 RCS/5.0
 Supported : sec - agree ,path , gruu
 Proxy - Require : sec - agree
 Require : sec - agree
 Contact: <sip : {UE_IMSI}@[{UE ip}]:5060; transport =UDP >;q =1.00;+ g.3 gpp
 .icsi - ref =" urn ;urn -7;3 gpp - service . ims . icsi . mmtel ";+ g.3 gpp . smsip ;
 video ;+ sip. instance ="< urn : gsma : imei :{UE_IMEI}>"
 Max - Forwards : 70
 CSeq : 1 REGISTER
 Call -ID: 2357994989 @{ UE_ip }
 To: <sip :{UE_IMSI} @ims . mnc042 . mcc123 .3 gppnetwork .org >
 From : <sip :{UE_IMSI} @ims . mnc042 . mcc123 .3 gppnetwork .org >; tag
 =653963826
 Security - Client: ipsec -3 gpp ; prot = esp ; mod = trans ;spi -c =3976; spi -s
 =3977; port -c =5202; port -s =6000; alg =hmac -sha -1 -96; ealg = null
 Authorization : Digest username ="{UE_IMSI} @ims . mnc042 . mcc123 .3
 gppnetwork . org ", realm =" ims . mnc042 . mcc123 .3 gppnetwork . org ", uri ="
 sip : ims . mnc042 . mcc123 .3 gppnetwork . org ", nonce ="" , response ="" ,
 algorithm = AKAv1 - MD5
 Expires : 3600
```

In the example REGISTER message above, The To: and From: fields are usually taken from the USIM application on the UICC, for example sip:{UE_IMSI}@ims.mnc042.mcc123.3gppnetowork.org. These fields have the same value in the Register message, representing the Public User Identity, also called Address-of-Record. This is the identity the other parties know and use to contact this particular UE. Consequently, they contain the public user identities. In some access types, these identities may be different.

The Contact: header represents a temporary point of presence for this UE. Its value is the most recent IP address the UE has and this address is stored in the P-CSCF. This is the third important parameter about the UE, the Contact Address, the other two being the registration URI and Address-of-Record.

The Authorization field caries out authentication information about the terminal. This information is the fourth parameter used for registration, having the role of the Private User Identity. This value is the equivalent of the IMSI field in a GSM system and it should not be displayed to the user. It is used by the AKA fields to authenticate the user. This parameter is composed of the private ID and the domain name of the home network where the UE registers. Depending on access type, also other authentication approaches may be used, such as username and password, Generic Bootstrapping or NASS bundled authentication. The AKA nonce and response parameters are empty, because this example case considers that the terminal has just been turned on for the first time, otherwise there should have been some cached information to send here. The Security-Client field lists the algorithms supported by the UE. In this example, the terminal has IPsec or TLS capabilities. The client requires the parties to agree on its security parameters and also indicates it supports the Path header.

For the case where the P-CSCF is not located in the same network as the home network of the UE, roaming case, P-CSCF may use information from the user in order to locate the I-CSCF from the home network. In case an I-BCF is present in the visited and home networks, these may be used to route SIP requests to a home network I-CSCF and I-CSCF details are not needed in the P-CSCF. This procedure is a DNS query specified in IETF RFC 3263 and its purpose is to give this P-CSCF a SIP URI of the home network I-CSCF. After the P-CSCF locates this I-CSCF, it will forward the REGISTER message to the I-CSCF (however see above for an implementation option using I-BCF), inserting along a P-Visited-Network-ID header that identifies the location, the domain name of the network, of the P-CSCF.

The IPSec or TLS tunnel set-up, or more generally the set-up of a cryptographic tunnel, may be based, for example, on the following user identities: public identity e.g. sip: {UE_IMSI}@ims.mnc042.mcc123.3gppnetowork.org, registration URI and/or contact (IP address).

Assuming that the cryptographic tunnel, such as IPSec or TLS secure tunnel, establishment based on the parameters is complete, subsequent messages may be piped through the cryptographic tunnel. Even if the access network is changed, no re-authentication is necessarily required, for example when first using GIBA authentication and then connecting via long term evolution, LTE.

A security risk is present in that a UE may manipulate the data it provides into the cryptographic tunnel, after the tunnel has been established. A compromised or malicious UE may feed into the tunnel SIP invite messages with incorrect "from", "to" and/or "p-asserted-identity" fields. "P-asserted-identity" fields may be removed by P-CSCF. If "p-preferred-identity" is included, it may be validated by the P-CSCF. As these messages are received in P-CSCF through an authenticated secured tunnel, the content may be accepted without separate authentication. Rather, the successful reception of the messages through such a cryptographic tunnel at the P-CSCF may be considered as sufficient evidence for the authenticity of the sender of this message, so that no further authentication by the P-CSCF, S-CSCF or an application server is required.

In some embodiments, the P-CSCF keeps with the cryptographic tunnel a state on identities used with this cryptographic tunnel. A state may be kept for each IP address, for example. Then, when a new message arrives through the tunnel a check may be made at the P-CSCF, or indeed other node which acts as an endpoint of a cryptographic tunnel, that validates if the "from" and "to" fields from the previous SIP REGISTER match the ones from the later SIP-Invite and SIP-REGISTER messages. For example, the check may establish whether the private identity used in the tunnel creation matches the subsequent public identities in the messages that are received later through that tunnel. Suitable public identities include Tel URI, SIP URI or other (temporary) public user identities received by the UE in the P-Associated-URI header field. Storing the state may comprise, in general, associating with the cryptographic tunnel at least one first identity used in connection with establishing the cryptographic tunnel, the at least one identity being associated with the user equipment. The associating may occur responsive to receipt in the P-CSCF of message 2200 of FIGURE 2, for example, as that signifies the UE has been authenticated by the network using the identities comprised in message 2120 of FIGURE 2. Of course, while described herein primarily with reference to IMS and SIP, the invention is not limited thereto but is applicable more broadly, where cryptographic tunnels are used between user equipments and network nodes.

A further, or alternative, enhancement to the P-CSCF is to configure the P-CSCF to validate there are no extra identities in the messages received from the cryptographic tunnel, that is, identities that should not be there or more than one instance of an identity, to detect overwriting attacks. It may otherwise happen, if there is more than one instance of an identity, that an initial entry of the identity during processing of the message will be overwritten by a later entry. This attack might otherwise be used to avoid the check described above, wherein the check would only search for the first entry of an identity, and then verify the identity is consistent with the identity used in establishing the tunnel. Then actual processing of the message would follow, where the overwriting might take place.

In case a subsequent request comprises an identity that is inconsistent with the identity or identities associated with the cryptographic tunnel, the P-CSCF, or other network node, may be configured to reject the message. Similarly, in case the subsequent request comprises too many identities, rejection may occur. Rejecting may comprise simply discarding the message. Optionally, rejecting may comprise, in addition to discarding or alternatively to discarding, informing the S-CSCF and/or a subscriber database of the erroneous message. The subscriber database, for example the HSS, may responsively inactivate the subscriber's access to the resources of the network.

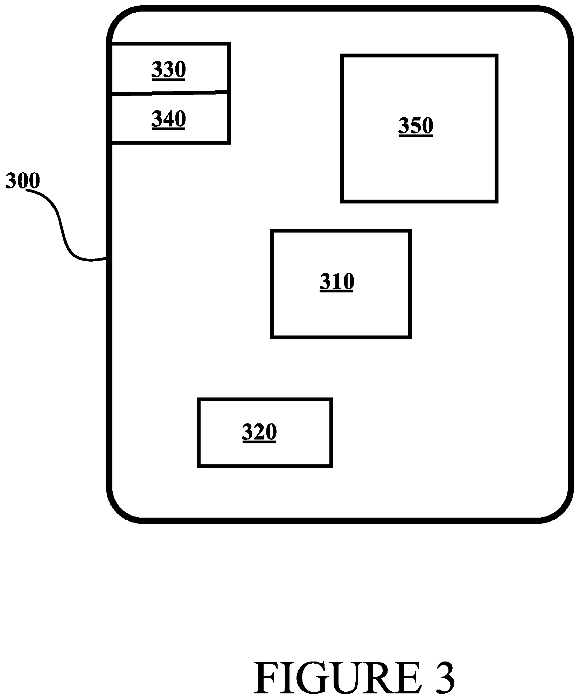

FIGURE 3 illustrates an example apparatus capable of supporting at least some embodiments of the present invention. Illustrated is device 300, which may comprise, for example, a network node such as a P-CSCF, for example. Comprised in device 300 is processor 310, which may comprise, for example, a single- or multi-core processor wherein a single-core processor comprises one processing core and a multi-core processor comprises more than one processing core. Processor 310 may comprise more than one processor. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Xeon processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. The transmitter 330 and/or receiver 340 may be wired or wireless. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise user interface, UI, 350. UI 350 may comprise at least one of a display, a keyboard, a touchscreen, a vibrator arranged to signal to a user by causing device 300 to vibrate, a speaker and a microphone. A user may be able to operate device 300 via UI 350, for example to configure security parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. In some embodiments, device 300 lacks at least one device described above.

Processor 310, memory 320, transmitter 330, receiver 340, UI 350 and/or other units of device 300 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

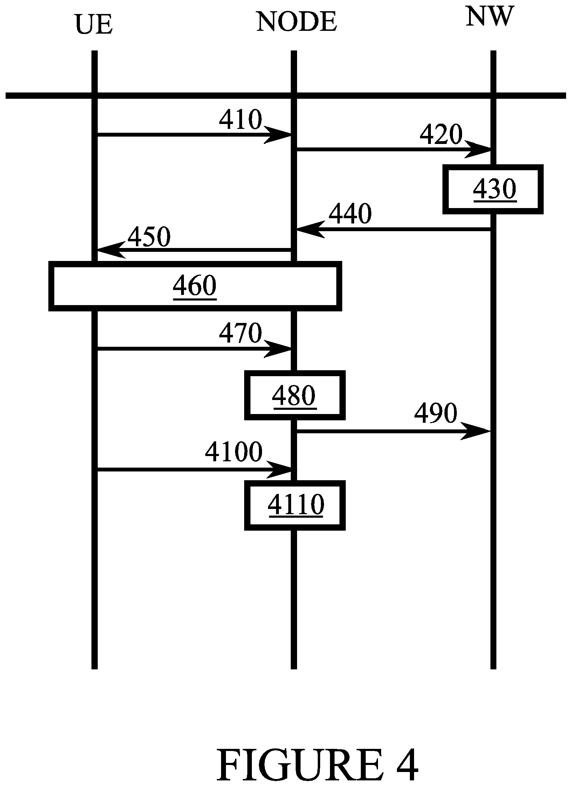

FIGURE 4 illustrates signalling in accordance with at least some embodiments of the present invention. On the vertical axes are disposed, on the left, a user equipment, UE, in the centre, a node with which the UE connects, which may comprise, for example, a P-CSCF in case IMS is used, and on the right, further levels of the network, which may comprise, for example, S-CSCF and/or HSS. Time advances from the top toward the bottom.

In phase 410, the UE seeks to register with the system. The request of phase 410 may comprise an identity of the UE and/or an identity of a subscription used with the UE. Information defining the subscription may be present in the UE in a universal integrated circuit card, UICC card, for example, which is inserted in the UE.

The node requests authentication of the identity or identities by transmitting the request of phase 420 to the network, where a HSS, for example, may be used to authenticate the identities. A challenge-response process, not illustrated in FIGURE 4 for the sake of clarity, may be employed between the UE and the network to complete authentication. Authentication is illustrated in FIGURE 4 as phase 430, which may comprise, as mentioned, also a challenge-response phase with the UE.

The node is informed of a successful authentication in phase 440, responsive to which the node informs the UE of this, phase 450. A cryptographic tunnel is established between the UE and the node in phase 460. Here, the node may associate at least one identity authenticated in phase 430 with the cryptographic tunnel established in phase 460.

In phase 470, the UE initiates a connection to the network. The node checks, phase 480, that an identity, or all identities, of the request of phase 470 are consistent with the identity or identities authenticated in phase 430. In this example this is the case, and the node responsively forwards the request onward to the network, phase 490.

In phase 4100, the UE initiates another connection to the network. The node checks, phase 4110, that an identity, or all identities, of the request of phase 4100 are consistent with the identity or identities authenticated in phase 430. In this example this is not the case, and the node responsively discards the request of phase 4100.

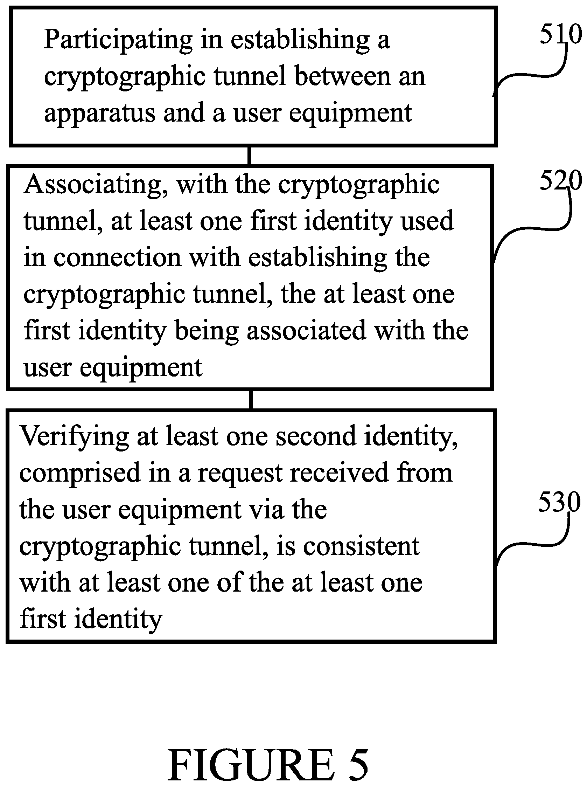

FIGURE 5 is a flow graph of a method in accordance with at least some embodiments of the present invention. The phases of the illustrated method may be performed in device 110, an auxiliary device or a personal computer, for example, or in a control device configured to control the functioning thereof, when installed therein.

Phase 510 comprises participating in establishing a cryptographic tunnel between an apparatus and a user equipment. Phase 520 comprises associating, with the cryptographic tunnel, at least one first identity used in connection with establishing the cryptographic tunnel, the at least one identity being associated with the user equipment. Finally, phase 530 comprises verifying at least one second identity, comprised in a request received from the user equipment via the cryptographic tunnel, is consistent with at least one of the at least one first identity. Using the at least one first identity in connection with establishing the tunnel may comprise that the at least one first identity was authenticated in connection with establishing the tunnel, for example.

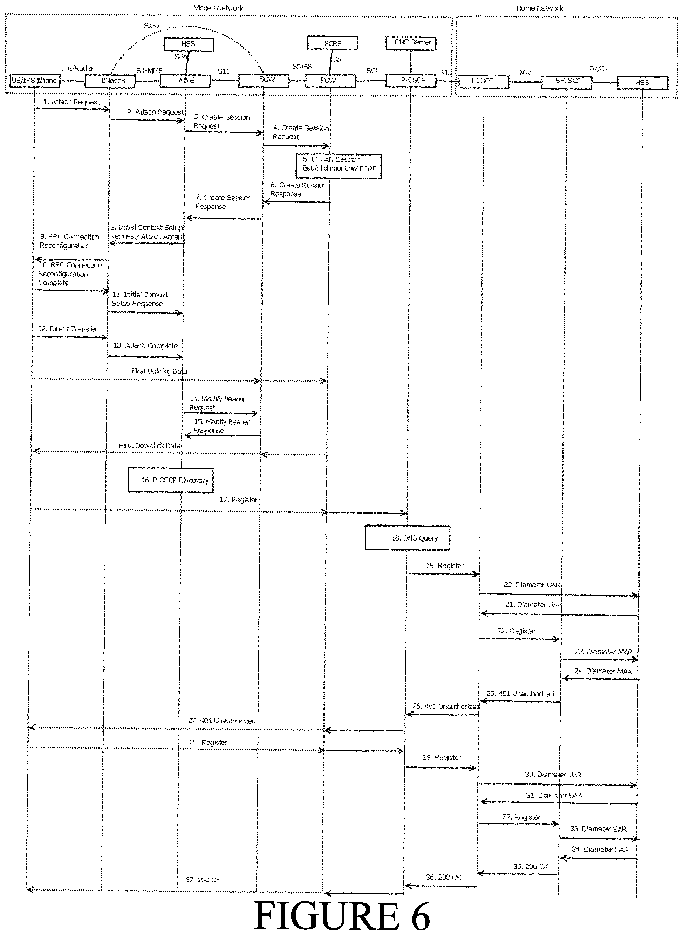

FIGURE 6 illustrates a more detailed example of the process illustrated in FIGURE 2, wherein FIGURE 6 also includes certain radio aspects.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in increasing security of communication networks.

### ACRONYMS LIST

- 3GPP: 3^{rd} Generation Partnership Project
- GIBA: GPRS-IMS-Bundled Authentication
- GRUU: Globally routable user agent URI
- GSM: Glocal System for Mobile Communications
- GSMA: GSM Association
- HSS: Home subscriber server
- I-CSCF: Interrogating call state control function
- IETF: Internet Engineering Task Force
- IMPI: IMS private identity
- IMPU: IMS public identity
- IMS: IP multimedia subsystem
- IMSI: International mobile subscriber identity
- IP: Internet protocol
- IP-CAN: IP Connectivity Access Network
- LTE: long term evolution
- MSISDN: Mobile Station international ISDN (for example)
- NR: New Radio
- P-CSCF: Proxy call state control function
- S-CSCF: Serving call state control function
- SIP: Session Initiation Protocol
- UE: User equipment
- UICC: Universal integrated circuit card
- URI: Uniform Resource Identifier
- WCDMA: Wideband Code Division Multiple Access
- WebRTC: Web real-time communication
- WiMAX: Worldwide interoperability for microwave access
- WLAN: Wireless local area network

**REFERENCE SIGNS LIST**

| | |
|---|---|
| 110 | Device |
| 120 | Base station |
| 141 | Network node |
| 150 | Network |
| 112 | Radio link |
| 124, 145 | Connections |
| 210 - 2210 | Phases of the process of FIGURE 4 |
| 300 - 350 | Structure of the apparatus of FIGURE 3 |
| 410-4110 | Phases of the process of FIGURE 4 |
| 510 - 530 | Phases of the method of FIGURE 5 |

## Claims

1. An apparatus (300) comprising:
- means for participating (310, 330, 340) in establishing a cryptographic tunnel between the apparatus and a user equipment;
- means for associating (310), with the cryptographic tunnel, at least one first identity used in connection with establishing the cryptographic tunnel, the at least one first identity being associated with the user equipment, the at least one first identity being a private identity, and
- means for verifying (310) at least one second identity, comprised in a request received from the user equipment via the cryptographic tunnel, is consistent with at least one of the at least one first identity, the second identity being a public identity, wherein the apparatus is configured to act as a proxy call session control function of an internet protocol multimedia subsystem, wherein the apparatus (300) further comprises means for rejecting (310) the request responsive to the at least one second identity being inconsistent with the at least one first identity.

2. The apparatus (300) according to claim 1, wherein the apparatus (300) comprises means for authenticating the at least one first identity in connection with establishing the cryptographic tunnel.

3. The apparatus (300) according to any of claims 1 - 2, wherein the means for verifying (310) are configured to verify the request does not comprise more than a predetermined number of second identities.

4. The apparatus (300) according to any of claims 1 - 3, wherein the request comprises a session initiation protocol, SIP, invite request.

5. The apparatus (300) according to any of claims 1 - 4, wherein the at least one first identity comprises at least one of a tel uniform resource identifier, tel-URI and a one second identity comprises at least one of a Tel URI, SIP URI and other (temporary) public user identity.

6. The apparatus (300) according to any of claims 1 - 5, wherein the request relates to initiating at least one of a voice over long term evolution, VoLTE, WebRTC and a voice over Wi-Fi, VoWiFi, session.

7. The apparatus (300) according to any of claims 1 - 6, wherein the cryptographic tunnel comprises at least one of an internet protocol security, IPsec, tunnel and a transport layer security, TLS, tunnel.

8. A method comprising:
- participating (510) in establishing a cryptographic tunnel between an apparatus and a user equipment;
- associating (520), in the apparatus, with the cryptographic tunnel, at least one first identity used in connection with establishing the cryptographic tunnel, the at least one first identity being associated with the user equipment, the at least one first identity being a private identity and
- verifying (530) in the apparatus that at least one second identity, comprised in a request received from the user equipment via the cryptographic tunnel, is consistent with at least one of the at least one first identity, the second identity being a public identity, wherein the apparatus is configured to act as a proxy call session control function of an internet protocol multimedia subsystem, and rejecting the request responsive to the at least one second identity being inconsistent with the at least one first identity.

9. The method according to claim 8, further comprising authenticating the at least one first identity in connection with establishing the cryptographic tunnel.

10. The method according to any of claims 8 - 9, further comprising verifying the request does not comprise more than a predetermined number of second identities.

11. A computer program configured to cause a method in accordance with at least one of claims 8 - 10 to be performed.

## Patentansprüche

1. Vorrichtung (300), die Folgendes umfasst:
- ein Mittel zum Teilnehmen (310, 330, 340) am Erstellen eines kryptographischen Tunnels zwischen der Vorrichtung und einer Teilnehmereinrichtung;
- ein Mittel zum Verknüpfen (310) mindestens einer ersten Identität, die in Verbindung mit dem Herstellen des kryptographischen Tunnels verwendet wird, mit dem kryptographischen Tunnel, wobei die mindestens eine erste Identität mit der Teilnehmereinrichtung verknüpft ist, wobei die mindestens eine erste Identität eine private Identität ist, und
- ein Mittel zum Verifizieren (310), dass mindestens eine zweite Identität, die in einer Anforderung umfasst ist, die von der Teilnehmereinrichtung via den kryptographischen Tunnel empfangen wird, mit mindestens einer der mindestens einen ersten Identität konsistent ist, wobei die zweite Identität eine öffentliche Identität ist, wobei die Vorrichtung dazu ausgelegt ist, als eine Proxyanrufsitzungssteuerfunktion eines Internetprotokollmultimediauntersystems zu fungieren, wobei die Vorrichtung (300) ferner ein Mittel zum Zurückweisen (310) der Anforderung in Reaktion darauf, dass die mindestens eine zweite Identität mit der mindestens einen ersten Identität nicht konsistent ist, umfasst.

2. Vorrichtung (300) nach Anspruch 1, wobei die Vorrichtung (300) ein Mittel zum Authentifizieren der mindestens einen ersten Identität in Verbindung mit dem Herstellen des kryptographischen Tunnels umfasst.

3. Vorrichtung (300) nach einem der Ansprüche 1-2, wobei das Mittel zum Verifizieren (310) dazu ausgelegt ist zu verifizieren, dass die Anforderung nicht mehr als eine vorbestimmte Anzahl von zweiten Identitäten umfasst.

4. Vorrichtung (300) nach einem der Ansprüche 1-3, wobei die Anforderung eine Sitzungsinitiierungsprotokoll(SIP)-Einladungsanforderung umfasst.

5. Vorrichtung (300) nach einem der Ansprüche 1-4, wobei die mindestens eine erste Identität mindestens eines von einer einheitlichen tel-Ressourcenkennung, tel-URI umfasst und eine zweite Identität mindestens eines von einer Tel URI, SIP URI und einer anderen (temporären) öffentlichen Benutzeridentität umfasst.

6. Vorrichtung (300) nach einem der Ansprüche 1-5, wobei die Anforderung das Initiieren von mindestens einem von einer Voice over Long Term Evolution(VoLTE)-, einer WebRTC- und einer Voice over Wi-Fi(VoWiFi)-Sitzung betrifft.

7. Vorrichtung (300) nach einem der Ansprüche 1-6, wobei der kryptographische Tunnel mindestens eines von einem Internetprotokollsicherheits(IPsec)-Tunnel und einem Transportschichtsicherheits(TLS)-Tunnel umfasst.

8. Verfahren, das Folgendes umfasst:
- Teilnehmen (510) am Erstellen eines kryptographischen Tunnels zwischen einer Vorrichtung und einer Teilnehmereinrichtung;
- Verknüpfen (520) mindestens einer ersten Identität, die in Verbindung mit dem Herstellen des kryptographischen Tunnels verwendet wird, in der Vorrichtung mit dem kryptographischen Tunnel, wobei die mindestens eine erste Identität mit der Teilnehmereinrichtung verknüpft ist, wobei die mindestens eine erste Identität eine private Identität ist, und
- Verifizieren (530) in der Vorrichtung, dass mindestens eine zweite Identität, die in einer Anforderung umfasst ist, die von der Teilnehmereinrichtung via den kryptographischen Tunnel empfangen wird, mit mindestens einer der mindestens einen ersten Identität konsistent ist, wobei die zweite Identität eine öffentliche Identität ist, wobei die Vorrichtung dazu ausgelegt ist, als eine Proxyanrufsitzungssteuerfunktion eines Internetprotokollmultimediauntersystems zu fungieren, und Zurückweisen der Anforderung in Reaktion darauf, dass die mindestens eine zweite Identität mit der mindestens einen ersten Identität nicht konsistent ist.

9. Verfahren nach Anspruch 8, das ferner das Authentifizieren der mindestens einen ersten Identität in Verbindung mit dem Herstellen des kryptographischen Tunnels umfasst.

10. Verfahren nach einem der Ansprüche 8-9, das ferner das Verifizieren, dass die Anforderung nicht mehr als eine vorbestimmte Anzahl von zweiten Identitäten umfasst, umfasst.

11. Computerprogramm, das dazu ausgelegt ist zu veranlassen, dass ein Verfahren nach mindestens einem der Ansprüche 8-10 durchgeführt wird.

## Revendications

1. Appareil (300) comprenant :
- des moyens pour participer (310, 330, 340) à l'établissement d'un tunnel cryptographique entre l'appareil et un équipement utilisateur ;
- des moyens pour associer (310) au tunnel cryptographique au moins une première identité utilisée en connexion avec l'établissement du tunnel cryptographique, l'au moins une première identité est associée à l'équipement utilisateur, l'au moins une première identité est une identité privée, et
- des moyens pour vérifier (310) qu'au moins une deuxième identité, comprise dans une demande reçue à partir de l'équipement utilisateur via le tunnel cryptographique, est compatible avec au moins une des premières identités, la deuxième identité est une identité publique, dans lequel l'appareil est configuré pour agir comme une fonction de contrôle de session d'appel proxy d'un sous-système multimédia de protocole Internet, dans lequel l'appareil (300) comprend en outre des moyens pour rejeter (310) la demande en réponse à une incompatibilité de l'au moins une deuxième identité avec l'au moins une première identité.

2. Appareil (300) selon la revendication 1, dans lequel l'appareil (300) comprend des moyens pour authentifier l'au moins une première identité en connexion avec l'établissement du tunnel cryptographique.

3. Appareil (300) selon l'une des revendications 1 et 2, dans lequel les moyens de vérification (310) sont configurés pour vérifier que la demande ne comprend pas plus d'un nombre prédéterminé de deuxièmes identités.

4. Appareil (300) selon l'une des revendications 1 à 3, dans lequel la demande comprend une demande d'invite de protocole d'ouverture de session, SIP.

5. Appareil (300) selon l'une des revendications 1 à 4, dans lequel l'au moins une première identité comprend au moins un identifiant de ressource uniforme tel, tel-URI, et une deuxième identité comprend au moins l'un parmi un Tel URI, un SIP URI et une autre identité d'utilisateur publique (temporaire).

6. Appareil (300) selon l'une des revendications 1 à 5, dans lequel la demande porte sur l'initiation d'au moins l'une parmi une WebRTC (communication en temps réel pour le Web) de voix sur évolution à long terme, VoLTE, et une session de voix sur Wi-Fi, VoWiFi.

7. Appareil (300) selon l'une des revendications 1 à 6, dans lequel le tunnel cryptographique comprend au moins l'un parmi un tunnel de sécurité de protocole Internet, IPsec et un tunnel de sécurité de couche transport, TLS.

8. Procédé comprenant :
- la participation (510) à l'établissement d'un tunnel cryptographique entre un appareil et un équipement utilisateur ;
- l'association (520), dans l'appareil, au tunnel cryptographique, d'au moins une première identité utilisée en connexion avec l'établissement du tunnel cryptographique, l'au moins une première identité est associée à l'équipement utilisateur, l'au moins une première identité est une identité privée et
- la vérification (530), dans l'appareil, qu'au moins une deuxième identité, comprise dans une demande reçue à partir de l'équipement utilisateur via le tunnel cryptographique, est compatible avec au moins une des premières identités, la deuxième identité est une identité publique, dans lequel l'appareil est configuré pour agir comme une fonction de contrôle de session d'appel proxy d'un sous-système multimédia de protocole Internet, et rejeter la demande en réponse à une incompatibilité de l'au moins une deuxième identité avec l'au moins une première identité.

9. Procédé selon la revendication 8, comprenant en outre l'authentification de l'au moins une première identité en connexion avec l'établissement du tunnel cryptographique.

10. Procédé selon l'une des revendications 8 et 9, comprenant en outre la vérification que la demande ne comprend pas plus d'un nombre prédéterminé de deuxièmes identités.

11. Programme informatique configuré pour amener un procédé conforme à au moins l'une des revendications 8 à 10 à être effectué.
